# EUROPEAN PATENT SPECIFICATION

(11) **EP 1 699 862 B1**
(45) Date of publication and mention of the grant of the patent: **27.05.2009**
(21) Application number: 03819212.6
(22) Date of filing: 31.12.2003
(51) Int. Cl.: C08K 5/3415

(54) **PREPARATION OF SEMI-CRYSTALLINE THERMOPLASTIC POLYMERS**
HERSTELLUNG VON TEILKRISTALLINEN THERMOPLASTISCHEN POLYMEREN
PREPARATION DE POLYMERES THERMOPLASTIQUES SEMI-CRISTALLINS

(43) Date of publication of application: 13.09.2006
(73) Proprietor: Council of Scientific and Industrial Research, New Delhi 110 001 (IN)
(72) Inventor: VERNEKAR, S. P. National Chemical Laboratory, Maharashtra (IN); CHELLASWAMY, Ramesh National Chemical Laboratory, Maharashtra (IN); SIVARAM, S. National Chemical Laboratory, Maharashtra (IN)
(74) Representative: Manaton, Ross Timothy
(86) International application number: PCT/IN2003/000460
(87) International publication number: WO 2005/063870

(56) References cited:
- EP-A- 0 887 375
- DE-A- 1 951 632

## Description

### Field of the invention

The present invention relates to an improved process for the preparation of semicrystalline thermoplastic polymers. More particularly the present invention relates to a process for preparation of thermoplastic polymers with improved crystallization temperature (Tc) and reduced spherulitic size and hence improved transparency characteristics. The semicrystalline thermoplastic polymers provided by the present invention comprises a polymer selected from aliphatic polyolefins (PO) and copolymers containing at least one aliphatic olefin and one or more ethylenically unsaturated aliphatic co-monomers and an imide of structures shown in Formula 1, Formula 2, Formula 3 and Formula 4 herein below alone or in combination with aliphatic fatty acids or its salts in an amount sufficient to improve crystallization temperature, reduce spherulitic size and hence improve transparency. 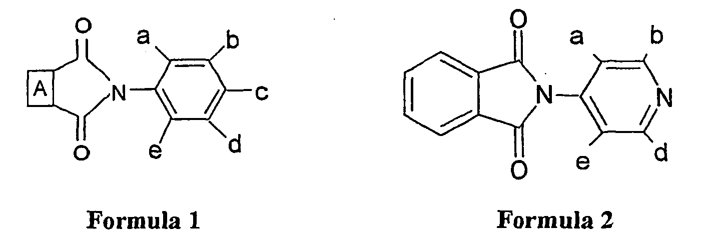 wherein A is double bond or aromatic ring, c is functional group such as carboxyl; a, b, d and e are either hydrogen or alkyl group of 1-4 carbon atoms or combination of hydrogen and alkyl or other functional groups such as carboxyl, halogen. 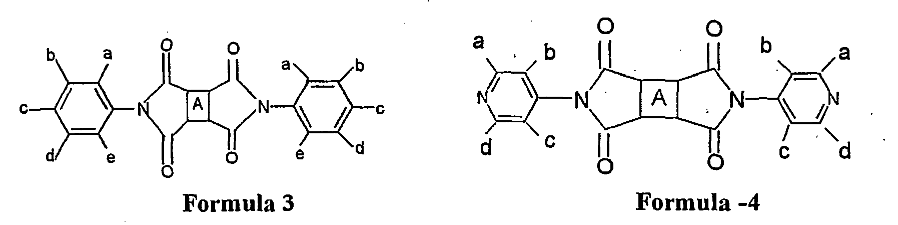 wherein A is benzene ring, or 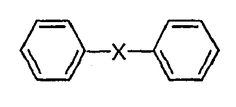 and X is O, -C=O, -SO₂ or CF₃ - C - CF₃ groups in Formula 3 and Formula 4, c is functional group such as carboxyl group in Formula 3 and a, b, d and e are either hydrogen or alkyl group of 1-4 carbon atoms or combination of hydrogen and alkyl or other functional groups such as carboxyl or halogen. In Formula 4, a, b, c and d are either hydrogen or alkyl group of 1-4 carbon atoms or combination of hydrogen and alkyl or other functional groups such as carboxyl or halogen.

### Background of the invention

Polyolefins (PO) are used for a wide variety of industrial applications. It is also used as materials for packaging, disposable medical appliances and containers. However, these polymers have poor transparency and they cannot be used for the applications where good transparency is desired, thereby limiting their application. Attempts have been made to improve transparency of polyolefins by adding certain additives known as nucleating agents (NA). Nucleating agent is an additive for plastic, which improves rate of crystallization of plastic. It increases crystallization temperature, reduces crystal size and improves optical clarity and mechanical properties of plastic. Various types of nucleating agents such as salts of mono and dibasic carboxylic acids, phosphate salts, fused ring compounds such as abietic acid derivatives, acetals of sorbitols etc. have been reported as nucleating agents for polyolefins. US Patent 5,135,975 describes use of acetals of sorbitol as nucleating agents. US Patent 3,367,926 describes the use of metal salts of carboxylic acid as nucleating agents for polypropylene. Japanese Patent 11140247 describes the use of phosphate salts as nucleating agents for polyolefins. In search of new nucleating agents for polypropylene, the inventors herein have studied many imides as nucleating agents for polypropylene and it was observed that some imides improve crystallization temperature and decrease the spherulite size of polypropylene significantly. Use of imides as nucleating agents for polyolefins has been reported in literature. US Patent 6,096,811 describes use of imides based on bicyclo[2.2.2.]oct-5-en-2,3-dicarboxylic acid anhydride with different aliphatic and aromatic amines. UK Patent 2,290,296 describes the use of imides as nucleating agents for polyolefins and other polymers. A series of imides and bismaleimides based on eight anhydrides, e.g. substituted and unsubstituted maleic anhydride, succinic acid anhydride norbon-4-en dicarboxylic acid anhydride, trimellitic acid and its derivatives, tetrahydrophthalic anhydride etc., with different amines and diamines. These amines are aliphatic or aromatic without any polar functional groups such as carboxyl groups.

The inventors of the present invention have observed that the nature of functional groups in aromatic amines of imdes play important role in nucleation of polyolfins. The present invention accordingly provides an improved process for the preparation of the thermoplastics using such imides and amic acids as nucleating agents for polypropylene.

### Objects of the invention

The main object of the present invention is to provide an improved process for the preparation of semi crystalline thermoplastic polymers using imides and amic acids as nucleating agents for polypropylene.

### Summary of the invention

Accordingly the present invention provides an improved process for the preparation of semi crystalline thermoplastic polymers having improved crystallization temperature (Tc) and reduced spherulitic size and improved transparency characteristics, which comprises nucleating an aliphatic polyolefin and optionally copolymers containing at least one aliphatic olefin and one or more ethylenically unsaturated comonomers with an imide selected from a compound of formula 1 to 4, 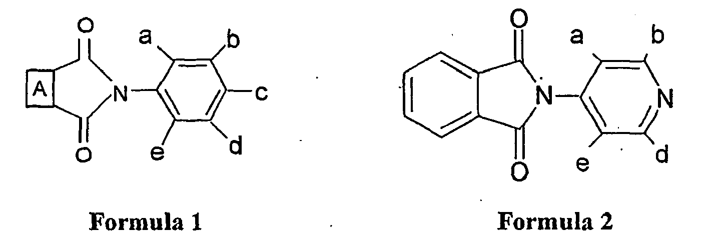 wherein A is double bond or aromatic ring, c is functional group such as carboxyl; a, b, d and e are either hydrogen or alkyl group of 1-4 carbon atoms or combination of hydrogen and alkyl or other functional groups such as carboxyl, halogen. 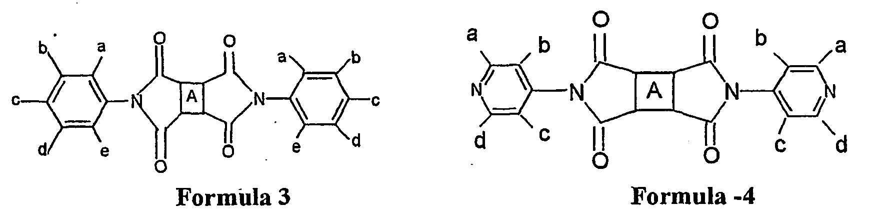 wherein A is benzene ring, or 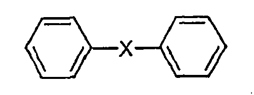 and X is O, -C=O, -SO₂ or CF₃ - C - CF₃ groups in Formula 3 and Formula 4, c is functional group such as carboxyl group in Formula 3 and a, b, d and e are either hydrogen or alkyl group of 1-4 carbon atoms or combination of hydrogen and alkyl or other functional groups such as carboxyl or halogen. In Formula 4, a, b, c and d are either hydrogen or alkyl group of 1-4 carbon atoms or combination of hydrogen and alkyl or other functional groups such as carboxyl or halogen, extruding the mixture at a temperature between 170-210°C to obtain the semi crystalline thermoplastic polymer having improved crystallization temperature (Tc) and reduced spherulitic size and hence improved transparency characteristics.

In one embodiment of the present invention the polyolefin polymers are selected from the group consisting of polymer and copolymers of aliphatic mono olefins containing two to about six carbon atoms having molecular weight of about 30,000 to about 5,00,000, preferably from 30,000 to about 3,00,000 such as polyethylene, polypropylene, ethylene-propylene copolymers and aliphatic poly olefins.

In another embodiment the comonomers contain at least one aliphatic olefin and one or more ethylenically unsaturated comonomers.

In another embodiment the co-polymer is 1 to 10% (w/w) of olefin.

In yet another embodiment, the amount of imide nucleating agent used in polyolefin composition is in the range of 0.01% to 5%, more preferably from 0.01% to 2.0% and most preferably, from 0.1% to 0.5% based on polyolefins.

In still another embodiment the composition contains nucleating agents along with other additives such as antioxidants, acid quenchers, UV absorbers, lubricants, surfactants or other additives, which are used in polyolefin compositions.

In another embodiment, the solvents used for the preparation of imide and amic acids are, but not restricted to, acetic acid, phenols, cresols, dimethyl formamide, dimethyl acetamide, dimethyl sulfoxide.

In another feature the amic acids and imides of the present invention are prepared by condensation of mono or di anhydrides such as, but not restricted to, phthalic anhydride, maleic anhydride, trimellitic anhydride, pyrromellitic dianhydride (PMDA), oxydiphthalic anhydride(ODPA), benzophenone tetracarboxylic dianhydride (BTDA), biphenyl dianhydride (BPDA), hexa fluoro propylidene di phthalic anhydride (6FDA), etc. with aromatic amines having a functional group at para position such as, but not restricted to, 4-aminobenzoic acid, 4-aminopyridine, 4- amino pyridines containing substituents, 4-cyanoaniline, 4-aminobenzoic acid containing substituents such as halogens, alkyl groups, triazines containing amine groups, diazines containing amine groups etc. The amic acid intermediates can be isolated or it can be heated further at higher temperature to obtain imides. In a feature of the present invention the nucleating agent can be added alone or in combination with other nucleating agents in any proportion in polyolefins.

### Detailed description of the invention

The present invention provides an improved process for the preparation of semi crystalline thermoplastic polymers having improved crystallization temperature (Tc) and reduced spherulitic size and hence improved transparency characteristics. The process comprises nucleating an aliphatic polyolefin and optionally copolymers containing at least one aliphatic olefin and one or more ethylenically unsaturated comonomers with an imide of formula (1) to (4) given above. The mixture is then extruded at a temperature between 170-210°C to obtain the thermoplastic polymer having improved crystallization temperature (Tc) and reduced spherulitic size and hence improved transparency characteristics.

The polyolefin polymers can include polymer and copolymers of aliphatic mono olefins containing two to about six carbon atoms having molecular weight of about 30,000 to about 5,00,000, preferably from 30,000 to about 3,00,000 such as polyethylene, polypropylene, ethylene-propylene copolymers, aliphatic poly olefins. The comonomers contain at least one aliphatic olefin and one or more ethylenically unsaturated comonomers. Most preferably, the co-polymer is 1 to 10% (w/w) of olefin.

The amount of imide nucleating agent used in polyolefin composition is from 0.01% to 5%, more preferably from 0.01% to 2.0% and most preferably, from 0.1% to 0.5% based on polyolefins. The composition may contain nucleating agents along with other additives such as antioxidants, acid quenchers, UV absorbers, lubricants, surfactants or other additives, which are used in polyolefin compositions.

In another feature the amic acids and imides of the present invention can be conveniently prepared by a variety of techniques, some of which are known in the art.

The solvents used for the preparation of imide and amic acids are, but not restricted to, acetic acid, phenols, cresols, dimethyl formamide, dimethyl acetamide, dimethyl sulfoxide. In another feature the amic acids and imides of the present invention are prepared by condensation of mono or di anhydrides such as, but not restricted to, phthalic anhydride, maleic anhydride, trimellitic anhydride, pyrromellitic dianhydride (PMDA), oxydiphthalic anhydride (ODPA), benzophenone tetracarboxylic dianhydride (BTDA), biphenyl dianhydride (BPDA), hexa fluoro propylidene di phthalic anhydride (6FDA), etc. with aromatic amines having a functional group at para position such as, but not restricted to, 4-aminobenzoic acid, 4-aminopyridine, 4- amino pyridines containing substituents, 4-cyanoaniline, 4-aminobenzoic acid containing substituents such as halogens, alkyl groups, triazines containing amine groups, diazines containing amine groups etc. The amic acid intermediates can be isolated or it can be heated further at higher temperature to obtain imides. In a feature of the present invention the nucleating agent can be added alone or in combination with other nucleating agents in any proportion in polyolefins.

The process of the present invention is described hereinbelow with reference to examples which are illustrative and should not be construed to limit the scope of the present invention in any manner.

### EXAMPLE 1:

### Preparation of N-(4-carboxy phenyl) maleimide (1)

A solution of maleic anhydride (1.43 g), 4-amino benzoic acid (2.0 g) in glacial acetic acid (6 mL) was heated at 120 ° C for 2 h. To the solution acetic anhydride (2 mL) was added and heated further at reflux for 5 h. The solution was cooled and poured in water. The solid separated was filtered, washed with water, dried and crystallized from methanol. Yield the product is ∼70% having high melting point above 240 °C.

### EXAMPLE 2:

### Preparation of N-(4-carboxy phenyl) phthalimide (2):

Sublimed phthalic anhydride (2.0 g) and acetic acid (7 mL) were heated in a flask at 50°C till clear solution was obtained. To this solution 4- amino benzoic acid (1.9 g) was added and the mixture was refluxed for 2 h. The contents were cooled and poured in distilled water. The solid separated was filtered, washed with water, dried and crystallized from alcohol. Yield of the product is 70%.

### EXAMPLE 3:

### Preparation of N-(4-hydroxy phenyl) phthalimide (3):

The above procedure was repeated and refluxed further for 2 h with acetic anhydride (2 mL) before adding to water. The reaction mixture was cooled when solid crystallizes out. The solid was filtered, washed with methanol and dried. The compound has high melting point above 235°C. IR, NMR and elemental analysis confirmed structures of all the above compounds.

### EXAMPLE 4:

### Preparation of N- (4-Pyridyl) Phthalimide (N-4-PPTH) (4):

In a clean, round bottom flask, Phthalic anhydride (0.78 g) was dissolved in acetic acid (4 mL). After the clear solution was formed, 4-amino Pyridine (0.5 g) was added to it. This solution was warmed for 15 min at 60 °C and 1 mL of acetic anhydride was added to the reaction mixture and the mixture was refluxed for 5h at 120°C. After 5 h the reaction mixture was cooled to room temperature. The white solid separated was filtered and dried.

### EXAMPLE 5:

### Preparation of diimide of benzophenone tetracarboxylic acid dianhydride (BTDA) and 4-amino benzoic acid(5):

In a clean 50 mL round bottom flask, was taken 4-amino benzoic acid (0.425 g). It was dissolved in 3 mL of m-cresol. In another flask benzophenone tetracarboxylic acid dianhydride (0.5 g) was dissolved with heating in 3-4 mL of m-cresol. The clear solution of benzophenone tetracarboxylic acid dianhydride (BTDA) was added to the amine solution and the solution was heated to 160°C in 1 h. and heated further at this temperature for 10 h. with constant stirring in an oil bath. After heating was complete the reaction mixture was cooled and poured in methanol. A white solid separated was filtered, washed with methanol and dried. The compound has high melting point above 255°C. IR confirmed the formation of imide groups.

### EXAMPLE 6:

### Preparation of diimide of oxydiphthalic anhydride (ODPA) with 4-aminobenzoic acid (6):

In a 50 mL round bottom flask was taken oxydiphthalic anhydride (0.25g). It was dissolved in 4 mL of m-cresol with heating. To this solution, 4-amino benzoic acid (0.22g) dissolved in 2 mL of m-cresol was added and the solution was heated to 170°C in 1h and maintained at this temperature for 5 h. with stirring. The reaction mixture was cooled and poured in methanol. The precipitated solid was filtered, washed with methanol and dried. The compound has high melting point above 255°C. The presence of imide group was conformed by IR. (Scheme-6)

### EXAMPLE 7:

### Preparation of N-(phenyl) phthalimide (7):

This compound was prepared by reacting phthalic anhydride and aniline in equimolar ratio following procedure described in Example-3. The compound was recrystallized from alcohol. The product has high melting point of 220°C. Yield of the product is 70%. Imides (0.2 g) prepared by methods described in above examples, were mixed with 100 g of polypropylene resin (MFI 12) and compounded along with additives namely, Irganox1010, 500 ppm; Ultranox-626, 800 ppm; Hydrotalcite DHT 4A, 200 ppm; Calcium stearate, 500 ppm; GMS-Finast 9500, 400 ppm on a Brabander single screw extruder. The extrusion temperature profile was 170 - 180 - 200 - 210 °C. The screw RPM was 60. The residence time was 30 seconds. The extruded material was palletized.

Crystallization temperature was determined by DSC. The sample was heated to 210°C and held at that temperature for 2 minutes. After this holding period, the sample was cooled to 50°C at a rate of 10°C per minute. From the exotherm, the onset of crystallization and peak crystallization temperature were determined.

The spherulite size of the samples was determined by optical microscope. A thin film of the sample was sandwiched between two glass slides and kept in the hot stage attached to the microscope. The sample was heated to 210°C and held at that temperature for 2 minutes. After this holding period, the sample was cooled to 50°C at a rate of 10°C per minute. During cooling the sample crystallized and spherulitic morphology could be observed through the microscope. The spherulite size was measured by the micrometer in the eyepiece.

The reaction schemes are given below:

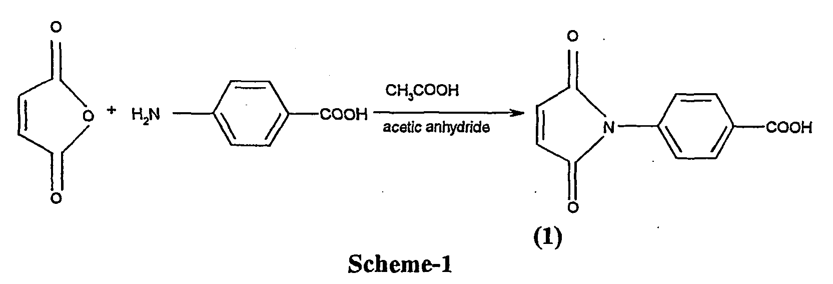

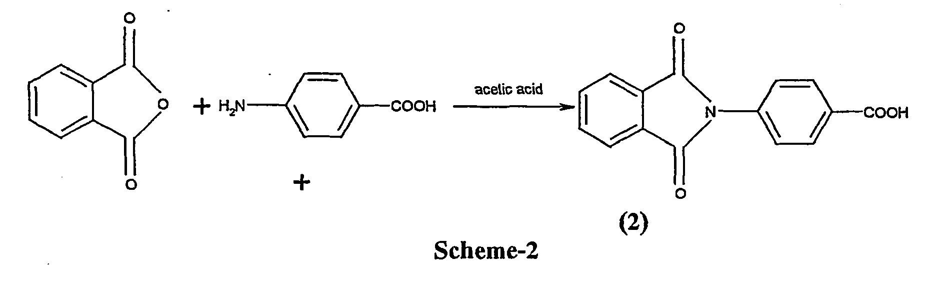

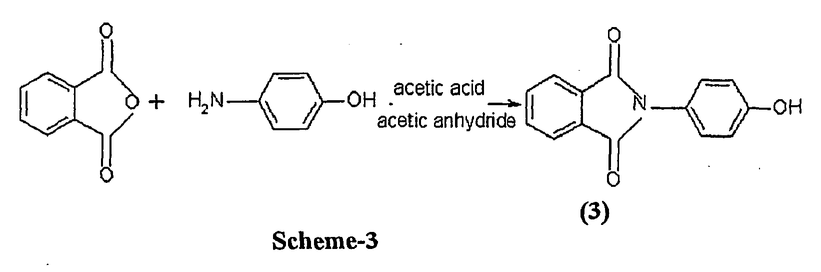

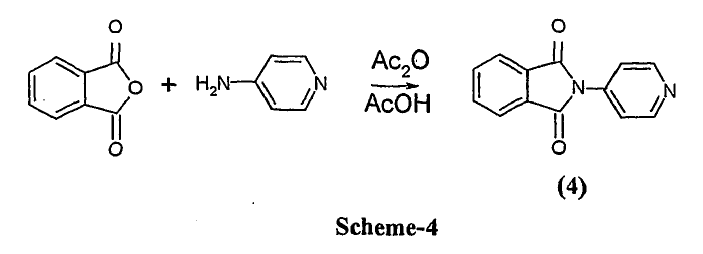

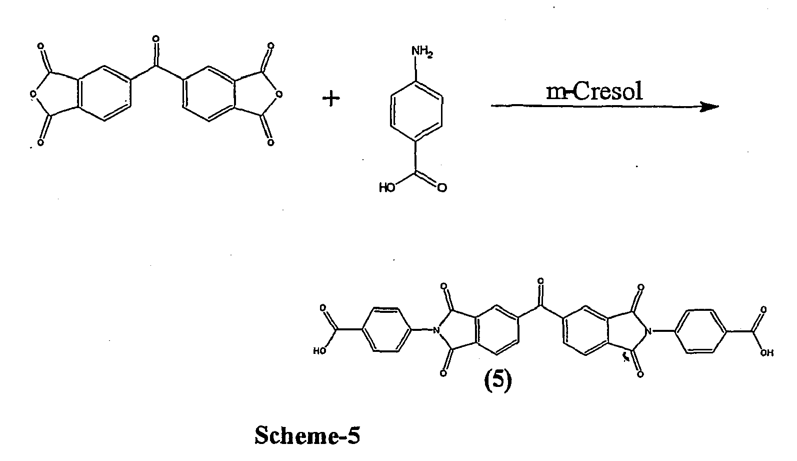

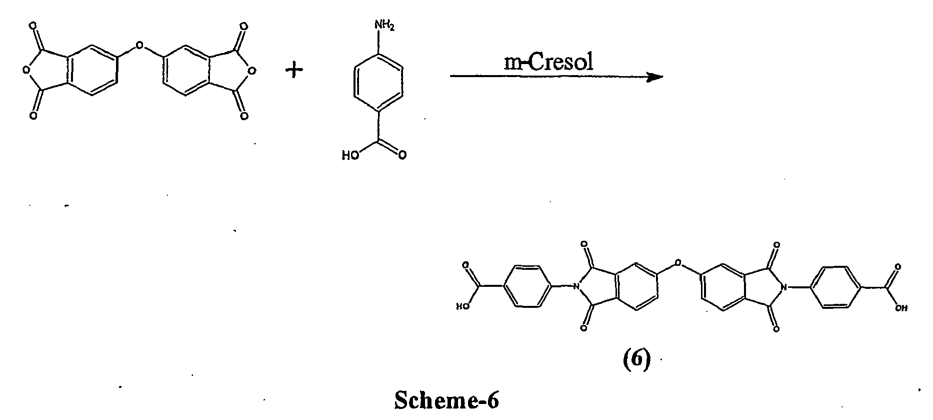

The thermal properties such as crystallization temperature (Tc) and onset temperature and spherulite size of polypropylene compositions containing these nucleating agents are given in Table 1. These results indicate that imides based on 4-aminobenzoic acid and 4-amino pyridine improve crystallization temperature and reduce spherulite size of polypropylene composition.

**Table 1: Thermal analysis of polypropylene composition containing imide nucleating agents.**

| **Sample** | **T_{C} (°C)** | **T_{C} onset (°C)** | **Spherulitic size µ** |
|---|---|---|---|
| EXAMPLE-1 | 108 | 113 | - |
| EXAMPLE-2 | 108 | 114 | 6 |
| EXAMPLE-3 | 99 | - | - |
| EXAMPLE-4 | 109 | 115 | 10 |
| EXAMPLE-5 | 107 | 110 | - |
| EXAMPLE-6 | 101 | 106 | - |
| COMPARATIVE EXAMPLE-7 | 98 | 104 | - |

## Claims

1. A process for the preparation of a semi crystalline thermoplastic polymer which comprises nucleating an aliphatic poly olefin with an imide selected from a compound of formula 1 to 4 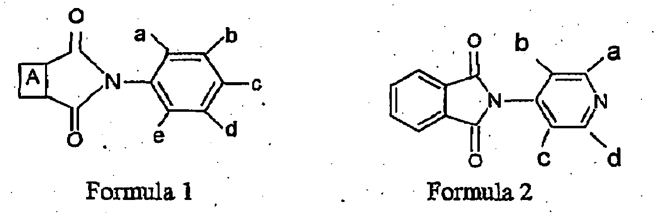 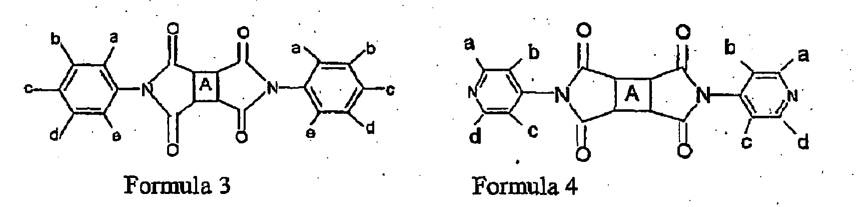 wherein A is double bond or aromatic ring, c is carboxyl, a, b, d and e are either hydrogen or an alkyl group of 1-4 carbon atoms or a combination of hydrogen and alkyl or a functional group selected from carboxyl and halogen in formula 1 and formula 2; and wherein in formula 3 and in formula 4 A is a benzene ring, or 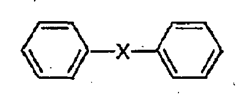 and X is O, -C=O, -SO₂ or CF₃ - C - CF₃ groups, and where in formula 3, c is a carboxyl group and a, b, d and e are either hydrogen or alkyl group of 1-4 carbon atoms or a combination of hydrogen and alkyl or a functional groups selected from carboxyl and halogen, and wherein in formula 4, a, b, c and d are either hydrogen or an alkyl group of 1-4 carbon atoms or a combination of hydrogen and alkyl or a functional group selected from carboxyl and halogen; and extruding a mixture at a temperature in the range of 170-210°C.

2. A process as claimed in claim 1 wherein the polyolefin polymer is a polymer or copolymer of an aliphatic mono olefin containing two to six carbon atoms and having molecular weight of 30,000 to 5,00,000.

3. A process as claimed in claim 2 wherein the aliphatic mono-olefin has a molecular weight in the range of 30,000 to 3,00,000.

4. A process as claimed in claim 2 wherein the aliphatic mono-olefin is selected from the group consisting of polyethylene, polypropylene and ethylene-propylene copolymers.

5. A process as claimed in claim 1 wherein the polyolefin is taken along with one or more copolymers containing at least one aliphatic olefin and one or more ethylenically unsaturated comonomers.

6. A process as claimed in claim 5 wherein the comonomer contains at least one aliphatic olefin and one or more ethylenically unsaturated comonomers.

7. A process as claimed in claim 5, wherein the comonomer in co-polymer is present in an amount of 1 to 10% (w/w) of olefin.

8. A process as claimed in claim 1 wherein the amount of imide nucleating agent used in polyolefin composition ranges from 0.01% to 5% based on the polyolefin.

9. A process as claimed in claim 1 wherein the amount of imide nucleating agent used in polyolefin composition is in the range of 0.01% to 2.0% based on the polyolefin.

10. A process as claimed in claim 1 wherein the amount of imide nucleating agent used in polyolefin composition is in the range of 0.1% to 0.5% based on polyolefin.

11. A process as claimed in claim 1 wherein one or more additives selected from the group consisting of antioxidants, acid quenchers, UV absorbers, lubricants and surfactants are added along with the nucleating agent.

## Patentansprüche

1. Verfahren zur Herstellung eines halbkristallinen thermoplastischen Polymers umfassend das Nukleieren eines aliphatischen Polyolefins mit einem Imid ausgewählt aus einer Verbindung der Formeln 1 bis 4 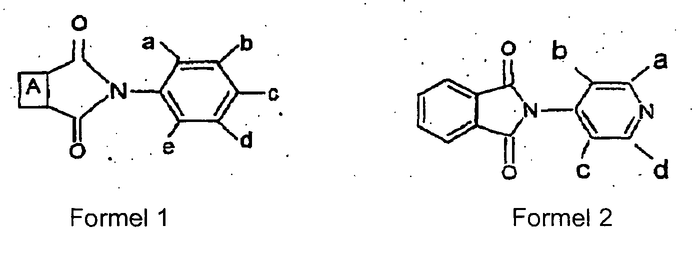 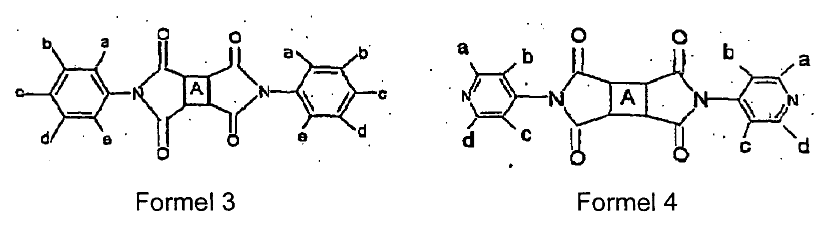 wobei A eine Doppelbindung oder ein aromatischer Ring ist, c ein Carboxyl ist, a, b, d und e entweder Wasserstoff oder eine Alkylgruppe mit 1-4 Kohlenstoffatomen oder eine Kombination von Wasserstoff und Alkyl oder eine funktionelle Gruppe ausgewählt aus Carboxyl und Halogen in der Formel 1 und Formel 2 sind; und wobei A in der Formel 3 und in der Formel 4 ein Benzolring ist oder 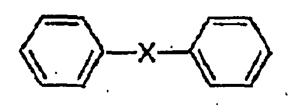 und X aus O, -C=O, -SO₂ oder CF₃ - C - CF₃-Gruppen besteht und wobei c in der Formel 3 eine Carboxylgruppe ist und a, b, d und e entweder eine Wasserstoff- oder eine Alkylgruppe mit 1-4 Kohlenstoffatomen oder eine Kombination von Wasserstoff und Alkyl oder eine funktionellen Gruppe ausgewählt aus Carboxyl und Halogen sind; und wobei a, b, c und d in der Formel 4 entweder Wasserstoff oder eine Alkylgruppe mit 1 - 4 Kohlenstoffatomen oder eine Kombination von Wasserstoff und Alkyl oder eine funktionellen Gruppe ausgewählt aus Carboxyl und Halogen sind; und das Extrudieren einer Mischung bei einer Temperatur im Bereich von 170-210 °C umfasst.

2. Verfahren nach Anspruch 1, wobei das Polyolefinpolymer ein Polymer oder Copolymer eines aliphatischen Monoolefins ist, das zwei bis sechs Kohlenstoffatome enthält und eine Molmasse von 30.000 bis 500.000 aufweist.

3. Verfahren nach Anspruch 2, wobei das aliphatische Monoolefin eine Molmasse im Bereich von 30.000 bis 300.000 aufweist.

4. Verfahren nach Anspruch 2, wobei das aliphatische Monoolefin aus der aus Polyethylen, Polypropylen und Ethylen-Propylen-Copolymeren bestehenden Gruppe ausgewählt ist.

5. Verfahren nach Anspruch 1, wobei das Polyolefin zusammen mit einem oder mehreren ein aliphatisches Olefin und ein oder mehrere ethylenisch ungesättigte Comonomere enthaltenden Copolymeren genommen wird.

6. Verfahren nach Anspruch 5, wobei das Comonomer mindestens ein aliphatisches Olefin und ein oder mehrere ethylenisch ungesättigte Comonomere enthält.

7. Verfahren nach Anspruch 5, wobei das Comonomer im Copolymer in einer Menge von 1 bis 10 (Gew.-) % bezogen auf das Olefin vorliegt.

8. Verfahren nach Anspruch 1, wobei die Menge an Imidnukleiermittel, die in der Polyolefinzusammensetzung verwendet wird, im Bereich von 0,01 % bis 5 % bezogen auf das Polyolefin vorliegt.

9. Verfahren nach Anspruch 1, wobei die Menge an Imidnukleiermittel, die in der Polyolefinzusammensetzung verwendet wird, im Bereich von 0,01 % bis 2 % bezogen auf das Polyolefin vorliegt.

10. Verfahren nach Anspruch 1, wobei die Menge an Imidnukleiermittel, die in der Polyolefinzusammensetzung verwendet wird, im Bereich von 0,1 % bis 0,5 % bezogen auf das Polyolefin verwendet wird.

11. Verfahren nach Anspruch 1, wobei ein oder mehrere Zusatzmittel ausgewählt aus der Gruppe bestehend aus Antioxidationsmitteln, Säurelöscher, UV-Absorptionsmitteln, Gleitmitteln und oberflächenaktiven Stoffen zusammen mit dem Nukleiermittel hinzugegeben wird bzw. werden.

## Revendications

1. Procédé de préparation d'un polymère thermoplastique semi-cristallin qui comprend une nucléation d'une polyoléfine aliphatique avec un imide choisi parmi un composé de formule 1 à 4 : 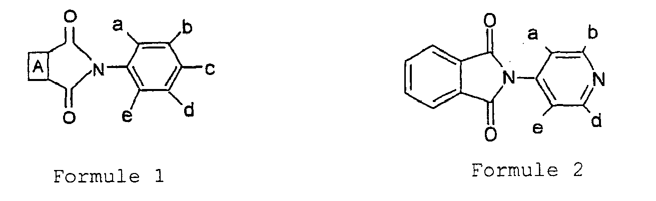 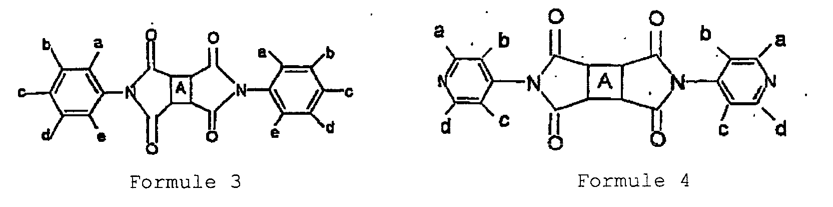 où A représente une liaison double ou un noyau aromatique, c représente carboxyle ; a, b, d et e représentent soit hydrogène, soit un groupe alkyle de 1 - 4 atomes de carbone, soit une combinaison d'hydrogène et alkyle, soit un groupe fonctionnel choisi parmi carboxyle et halogène dans la formule 1 et la formule 2 ; et où dans la formule 3 et la formule 4, A représente un noyau benzénique, ou 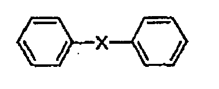 et X représente O, des groupes -C=O, -SO₂ ou CF₃-C-CF₃, et où, dans la formule 3, c représente un groupe carboxyle et a, b, d et e représentent soit hydrogène, soit un groupe alkyle de 1 à 4 atomes de carbone, soit une combinaison d'hydrogène et alkyle, soit des groupes fonctionnels choisis parmi carboxyle et halogène, et où, dans la formule 4, a, b, c et d représentent soit hydrogène, soit un groupe alkyle de 1 à 4 atomes de carbone, soit une combinaison d'hydrogène et alkyle, soit un groupe fonctionnel choisi parmi carboxyle et halogène ; et l'extrusion d'un mélange à une température dans la plage de 170°-210°C.

2. Procédé selon la revendication 1, dans lequel le polymère de polyoléfine est un polymère ou un copolymère d'une mono-oléfine aliphatique contenant deux à six atomes de carbone et ayant une masse moléculaire de 30 000 à 5 00 000.

3. Procédé selon la revendication 2, dans lequel la mono-oléfine aliphatique a une masse moléculaire dans la plage de 30 000 à 3 00 000.

4. - Procédé selon la revendication 2, dans lequel la mono-oléfine aliphatique est choisie dans le groupe consistant en copolymères de polyéthylène, polypropylène et éthylène-propylène.

5. Procédé selon la revendication 1, dans lequel la polyoléfine est prise conjointement avec un ou plusieurs copolymères contenant au moins une oléfine aliphatique et un ou plusieurs comonomères à insaturation éthylénique.

6. Procédé selon la revendication 5, dans lequel le comonomère contient au moins une oléfine aliphatique et un ou plusieurs comonomères à insaturation éthylénique.

7. Procédé selon la revendication 5, dans lequel le comonomère dans le copolymère est présent dans une quantité de 1 à 10% (p/p) d'oléfine.

8. Procédé selon la revendication 1, dans lequel la quantité d'agent de nucléation imide utilisée dans la composition de polyoléfine se situe dans la plage de 0,01% à 5,0% sur la base de la polyoléfine.

9. Procédé selon la revendication 1, dans lequel la quantité d'agent de nucléation imide utilisée dans la composition de polyoléfine se situe dans la plage de 0,01% à 2,0% sur la base de la polyoléfine.

10. Procédé selon la revendication 1, dans lequel la quantité d'agent de nucléation imide utilisée dans la composition de polyoléfine se situe dans la plage de 0,1% à 0,5% sur la base de la polyoléfine.

11. Procédé selon la revendication 1, dans lequel un ou plusieurs additifs choisis dans le groupe consistant en antioxydants, désactivateurs d'acide, agents absorbant le rayonnement UV, lubrifiants et agents tensioactifs sont ajoutés conjointement avec l'agent de nucléation.
